# EUROPEAN PATENT APPLICATION

(11) **EP 4 451 121 A1**
(43) Date of publication of application: **23.10.2024**
(21) Application number: 23742803.2
(22) Date of filing: 13.01.2023
(51) Int. Cl.: G06F 9/451

(54) **SPLIT-SCREEN INTERACTION METHOD AND APPARATUS FOR MOBILE TERMINAL, STORAGE MEDIUM AND DEVICE**

(30) Priority: 19.01.2022 CN 202210062611
(71) Applicant: BEIJING BYTEDANCE NETWORK TECHNOLOGY CO., LTD., Beijing 100041 (CN)
(72) Inventor: HU, Jiao, Beijing 100086 (CN)
(74) Representative: Dentons UK and Middle East LLP
(86) International application number: PCT/CN2023/072017
(87) International publication number: WO 2023/138488

(57) **Abstract**

The present disclosure discloses a split-screen interaction method and apparatus for a mobile terminal, a storage medium, and a device. The method comprises: first, creating a full-screen transparent web view of the mobile terminal as a carrier container, and loading the H5 page in the container; then setting the H5 page as a split-screen page of a first preset split-screen style, and loading a pop-up window split-screen page of a full-screen mask and a second preset split-screen style in the H5 page, thereby realizing communication and interaction between the split-screen page of the first preset split-screen style and the pop-up window split-screen page of the second preset split-screen style by means of communication among page components in the H5 page. Thus, first a full-screen transparent web view rendering container is realized, the H5 page is opened in the container; then a split-screen page of the preset split-screen style, a full-screen mask pop-up window split-screen page, and interaction and communication between the two split-screen pages are realized in the H5 page, so that split-screen efficiency is improved, and interaction form and functionality between the split-screen pages are enriched.

## Description

The present disclosure claims the priority of the Chinese Patent Application No. 202210062611.3 filed on January 19, 2022 and entitled "Split-Screen Interaction Method and Apparatus for Mobile Terminal, Storage Medium and Device", the entirety of which is incorporated herein by reference.

### FIELD

Embodiments of the present disclosure relate to the field of computer technology, and specifically, to a method and an apparatus for split-screen interaction on mobile terminal, storage medium and a device.

### BACKGROUND

With the popularity of mobile devices such as smart phones and tablets, people have higher and higher requirements for mobile devices. When the screen of a mobile device is large enough, the split-screen function for it also emerges.

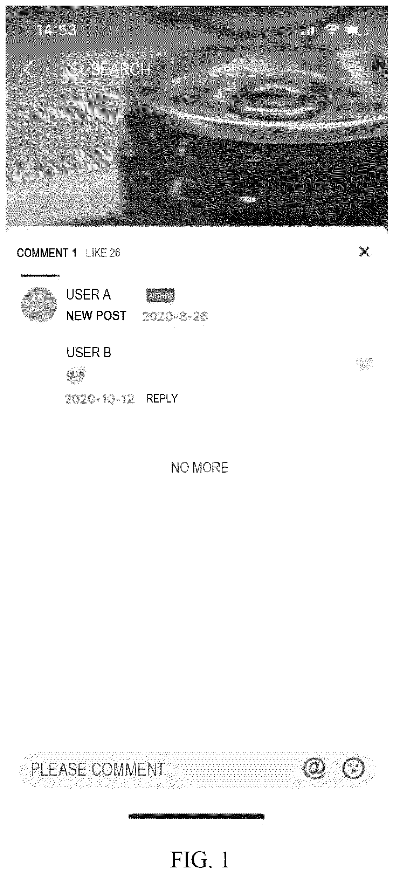

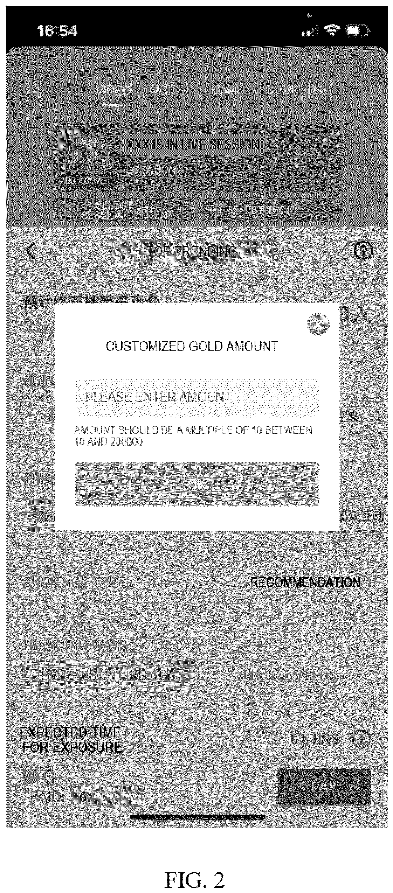

Now in lots of application software (applications, referred to as APPs) installed on mobile terminals, there are usually a large number of scenarios that require split-screen interactions on mobile terminals, such as commenting in video streams and tools for gifting, selling and top trending in live sessions as shown in FIG. 1. The forms of interactions between these split-screen interfaces are generally divided into two types: interactions within a split screen, and interactions between the split-screen page and the full-screen masks, such as the centered pop-up interface of a full-screen mask opened in a half-screen page as shown in FIG. 2, or an x-screen (e.g., three-screen) pop-up interface of a global mask opened in a half-screen page.

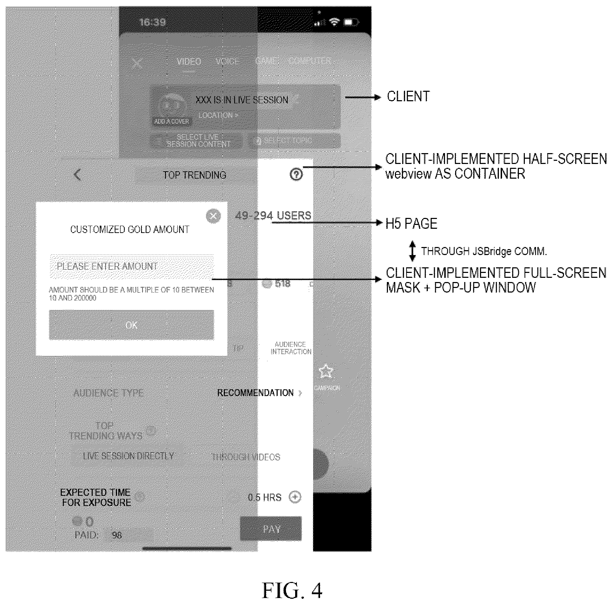

At present, in order to achieve rapid iteration and update of the APPs, the Hybrid development mode is usually used, that is, to develop the 5th generation (5G) Hypertext expression language (H5) pages to achieve split-screen interactions on the mobile terminal. For example, in order to implement the split-screen on a mobile terminal as shown in FIG. 2, a half-screen container is rendered by a half-screen web view and a H5 page is opened therein, as shown in FIG. 4. Then the H5 page communicates with the client through JSBridge, calling the client to open the full screen mask and display the pop-up page function. However, this way for split-screen interactions relies on the terminal capabilities and involves the addition and iteration of APP functions, requiring timely updates of the client versions, which is not flexible enough. In the meantime, the display of full screen masks and pop-up pages also relies on the JSBridge communications between the H5 page and the client, resulting in low split screen efficiency, and the interaction form and function between split screen interfaces are also limited.

### SUMMARY

Embodiments of the present disclosure provide a method and an apparatus for split-screen interaction on a mobile terminal, storage medium and device, which can effectively improve the split-screen efficiency of the mobile terminal and enrich the interactive forms and functions between split-screen pages.

Embodiments of the present disclosure provide a method for split-screen interaction on a mobile terminal, comprising: creating a full-screen transparent web view interface on the mobile terminal as a carrier container and loading a 5G internet hypertext markup language H5 page in the container; setting the H5 page as a split-screen page of a first predetermined split-screen style; loading a full-screen mask and a pop-up split-screen page of a second predetermined split-screen style within the H5 page; and facilitating communication and interaction between the split-screen page of the first predetermined split-screen style and the pop-up split-screen page of the second predetermined split-screen style by means of communication among page components to improve an efficiency of split-screen and interaction functions of the mobile terminal.

In a possible embodiment, creating a full-screen transparent web view interface on the mobile terminal as a carrier container and loading a 5G internet hypertext markup language H5 page in the container comprises: creating a full-screen web view as a carrier container; creating a request for H5 page, and loading the H5 page in the container in response to the request; and after setting a background of the web view to be transparent, adding the web view with the transparent background that loads the H5 page to an interface of the mobile terminal.

In a possible embodiment, setting the H5 page as a split-screen page of a first predetermined split-screen style comprises: setting an overall height of the H5 page to full screen height, and setting a background of the page to be transparent; and dividing an overall layout of the H5 page into a header and text content that is rendered line-by-line, setting a background of the header to be transparent, setting a background of the content to a predetermined background color, and setting a height of the content to a half-screen height.

In a possible embodiment, loading a full-screen mask and a pop-up split-screen page of a second predetermined split-screen style within the H5 page comprises: adding a full-screen mask component within the H5 page, and loading the full-screen mask by means of the full-screen mask component; and displaying the pop-up split-screen page of second predetermined split-screen style on the full-screen mask in a pop-up display manner.

In a possible embodiment, facilitating communication and interaction between the split-screen page of the first predetermined split-screen style and the pop-up split-screen page of the second predetermined split-screen style by means of communication among page components to improve an efficiency of split-screen and interaction functions of the mobile terminal comprises: facilitating the communication and interaction between the split-screen page of the first predetermined split-screen style and the pop-up split-screen page of the second predetermined split-screen style by means of communications among parent and child components to improve the efficiency of split-screen and the interaction functions of the mobile terminal.

In a possible embodiment, facilitating the communication and interaction between the split-screen page of the first predetermined split-screen style and the pop-up split-screen page of the second predetermined split-screen style by means of communications among parent and child components to improve the efficiency of split-screen and the interaction functions of the mobile terminal comprises: within the H5 page, in response to a user's click operation on a button on the split-screen page of the first predetermined split-screen style, opening the full-screen mask with a button component; displaying text content input by the user in the pop-up split-screen page of the second predetermined split-screen style of the full-screen mask with a text component; controlling display and hiding of the full-screen mask with a full-screen mask component; and providing the text content input by the user in the pop-up split-screen page of the second predetermined split-screen style to the parent component by a callback function, and assigning a value to a respective variable in the parent component to facilitate the communication and interaction between the split-screen page of the first predetermined split-screen style and the pop-up split-screen page of the second predetermined split-screen style to improve the efficiency of split-screen and the interaction functions of the mobile terminal.

In a possible embodiment, the split-screen page of the first predetermined split-screen style is a half-screen split-screen page, and the pop-up split-screen page of the second predetermined split-screen style is a pop-up split-screen interface displayed in a center of full screen or a pop-up split-screen page of a three-screen style.

Embodiments of the present disclosure also provide apparatus for split-screen interaction on a mobile terminal, comprising: a first loading unit configured to create a full-screen transparent web view interface on the mobile terminal as a carrier container and loading a 5G internet hypertext markup language H5 page in the container; a setting unit configured to set the H5 page as a split-screen page of a first predetermined split-screen style; a second loading unit configured to load a full-screen mask and a pop-up split-screen page of a second predetermined split-screen style within the H5 page; and an interaction unit configured to facilitate a communication and interaction between the split-screen page of the first predetermined split-screen style and the pop-up split-screen page of the second predetermined split-screen style by means of communication among page components to improve an efficiency of split-screen and interaction functions of the mobile terminal.

In a possible embodiment, the first loading unit comprises a creating subunit configured to create a full-screen web view as a carrier container; creating a request for H5 page, and a first loading subunit configured to load the H5 page in the container in response to the request; and an adding subunit configured to, after setting a background of the web view to be transparent, add the web view with the transparent background that loads the H5 page to an interface of the mobile terminal.

In a possible embodiment, the setting unit comprises a first setting subunit configured to set an overall height of the H5 page to full screen height, and a second setting subunit configured to set a background of the page to be transparent and to divide an overall layout of the H5 page into a header and text content that is rendered line-by-line, setting a background of the header to be transparent, setting a background of the content to a predetermined background color, and setting a height of the content to a half-screen height.

In a possible embodiment, the second loading unit comprises a second loading subunit configured to add a full-screen mask component within the H5 page and load the full-screen mask by means of the full-screen mask component; and a display subunit configured to display the pop-up split-screen page of second predetermined split-screen style on the full-screen mask in a pop-up display manner.

In a possible embodiment, the interaction unit is specifically configured to facilitate the communication and interaction between the split-screen page of the first predetermined split-screen style and the pop-up split-screen page of the second predetermined split-screen style by means of communications among parent and child components to improve the efficiency of split-screen and the interaction functions of the mobile terminal.

In a possible embodiment, the interaction unit comprises: an opening subunit configured to, within the H5 page, in response to a user's click operation on a button on the split-screen page of the first predetermined split-screen style, open the full-screen mask with a button component; a display subunit configured to display text content input by the user in the pop-up split-screen page of the second predetermined split-screen style of the full-screen mask with a text component; an interaction subunit configured to control display and hiding of the full-screen mask with a full-screen mask component and provide the text content input by the user in the pop-up split-screen page of the second predetermined split-screen style to the parent component by a callback function, and assign a value to a respective variable in the parent component to facilitate the communication and interaction between the split-screen page of the first predetermined split-screen style and the pop-up split-screen page of the second predetermined split-screen style to improve the efficiency of split-screen and the interaction functions of the mobile terminal.

In a possible embodiment, the split-screen page of the first predetermined split-screen style is a half-screen split-screen page, and the pop-up split-screen page of the second predetermined split-screen style is a pop-up split-screen interface displayed in a center of full screen or a pop-up split-screen page of a three-screen style.

Embodiments of this disclosure also provide a device for split-screen interaction on a mobile terminal, comprising a processor, a memory, and a system bus. The processor and the memory are connected through the system bus, and the memory is configured to store one or more programs comprising instructions, the instructions, when executed by the processor, causing the processor to perform any of the above methods.

Embodiments of the present disclosure also provide a computer-readable storage medium storing instructions thereon, the instructions, when executed on a terminal device, causing the terminal device to execute any of the above methods.

According to the method and apparatus for split-screen interaction on mobile terminal, storage medium and device as proposed by embodiments of the present disclosure, a full-screen transparent web view interface of the mobile terminal is first created as a carrier container, and the H5 page is loaded in the container. Then the H5 page is set as a split-screen page of a first predetermined split-screen style. Then, within the H5 page, the full-screen mask and a pop-up split-screen page of the second predetermined split-screen style are loaded. Within the H5 page, the communication and interaction between the split-screen page of the first predetermined split-screen style and the pop-up split-screen page of the second predetermined split-screen style are realized by means of the communications among page components, so as to improve the split-screen efficiency and interaction function of the mobile terminal. It can be seen that the embodiments of the present disclosure first implement a full-screen transparent web view to render a full-screen container and open an H5 page inside the container, and then implement a predetermined split-screen style split-screen page and a full-screen masked pop-up split-screen page in the H5 page. Moreover, the interaction and communication between these two split-screen pages are all performed within the H5 page. As a result, it is possible to improve the split-screen efficiency of the mobile terminal and enrich the forms and functions of interactions between the split-screen pages.

### BRIEF DESCRIPTION OF THE DRAWINGS

In order to more clearly illustrate the embodiments of the present disclosure or the technical solutions in the prior art, the drawings that need to be used in the description of the embodiments or the prior art will be briefly introduced below. Obviously, the drawings in the following description are the embodiments of the present disclosure. For some embodiments, those of ordinary skill in the art can also obtain other drawings based on these drawings without exerting creative efforts.
FIG. 1 is a first example diagrams of a conventional mobile terminal split-screen display provided by embodiments of the present disclosure;
FIG. 2 is a second example diagram of a conventional mobile terminal split-screen display provided by embodiments of the present disclosure;

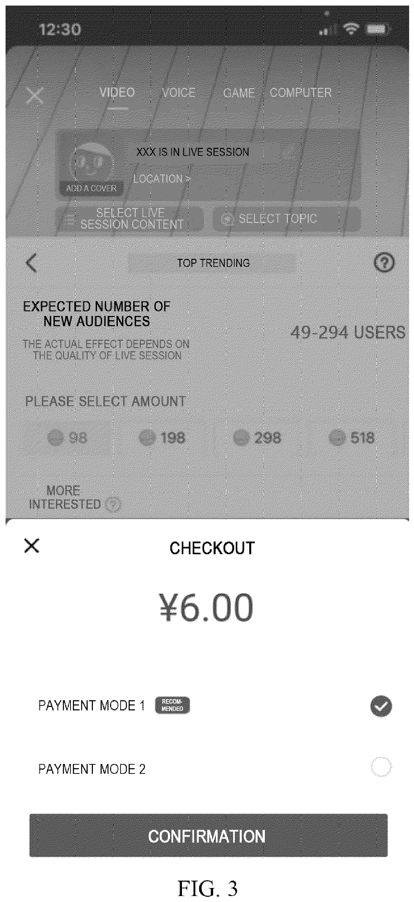

FIG. 3 is a third example diagram of a conventional mobile terminal split-screen display provided by embodiments of the present disclosure;
FIG. 4 is an example diagram of a conventional split-screen interaction method on a mobile terminal provided by embodiments of the present disclosure;
FIG. 5 is a schematic flow chart of a method for split-screen interaction on a mobile terminal provided by embodiments of the present disclosure;
FIG. 6 is a first example diagrams of the method for split-screen interaction on the mobile terminal provided by embodiments of the present disclosure;
FIG. 7 is a second example diagram of the method for split-screen interaction on the mobile terminal provided by embodiments of the present disclosure; and
FIG. 8 is a schematic diagram of an apparatus for split-screen interaction on of a mobile terminal provided by embodiments of the present disclosure.

### DETAILED DESCRIPTION

With the popularity of mobile devices such as smart phones and tablets, people have higher and higher requirements for mobile devices. When the screen of a mobile device is large enough, the split-screen function for it also emerges.

Currently, in order to achieve rapid iteration and update of the APPs, the Hybrid development mode is usually used, that is, to develop the 5th generation (5G) Hypertext expression language (H5) pages to achieve split-screen interactions on the mobile terminal. For example, in order to implement the split-screen on a mobile terminal as shown in FIG. 2, a half-screen container is rendered by a half-screen web view and a H5 page is opened therein, as shown in FIG. 4. Then the H5 page communicates with the client through JSBridge, calling the client to open the full screen mask and display the pop-up page function. However, this way for split-screen interactions relies on the terminal capabilities and involves the addition and iteration of APP functions, requiring timely updates of the client versions, which is not flexible enough. In the meantime, the display of full screen masks and pop-up pages also relies on the JSBridge communications between the H5 page and the client, resulting in low split screen efficiency. Moreover, the communications between the H5 page and the client belong to communications of two different types, and only a single form of communications (e.g., data import, export, etc.) can be realized. As a result, the forms and functions of interactions between split screen interfaces are limited.

In order to solve the above problems, embodiments of the present disclosure provides method and apparatus for split-screen interaction on the mobile terminal, storage medium and device, a full-screen transparent web view interface of the mobile terminal is first created as a carrier container, and the H5 page is loaded in the container. Then the H5 page is set as a split-screen page of a first predetermined split-screen style. Then, within the H5 page, the full-screen mask and a pop-up split-screen page of the second predetermined split-screen style are loaded. Within the H5 page, the communication and interaction between the split-screen page of the first predetermined split-screen style and the pop-up split-screen page of the second predetermined split-screen style are realized by means of the communications among page components, so as to improve the split-screen efficiency and interaction function of the mobile terminal. It can be seen that the embodiments of the present disclosure first implement a full-screen transparent web view to render a full-screen container and open an H5 page inside the container, and then implement a predetermined split-screen style split-screen page and a full-screen masked pop-up split-screen page in the H5 page. Moreover, the interaction and communication between these two split-screen pages are all performed within the H5 page. As a result, it is possible to improve the split-screen efficiency of the mobile terminal and enrich the forms and functions of interactions between the split-screen pages.

In order to make the purpose, technical solutions and advantages of the embodiments of the present disclosure clearer, the technical solutions of the embodiments of the present disclosure will be clearly and completely described below in conjunction with the drawings in the embodiments of the present disclosure. Apparently, the described embodiments are part of the present disclosure. embodiments, not all embodiments. Based on the embodiments in this disclosure, all other embodiments obtained by those of ordinary skill in the art without creative efforts fall within the scope of protection of this disclosure.

### First Embodiment

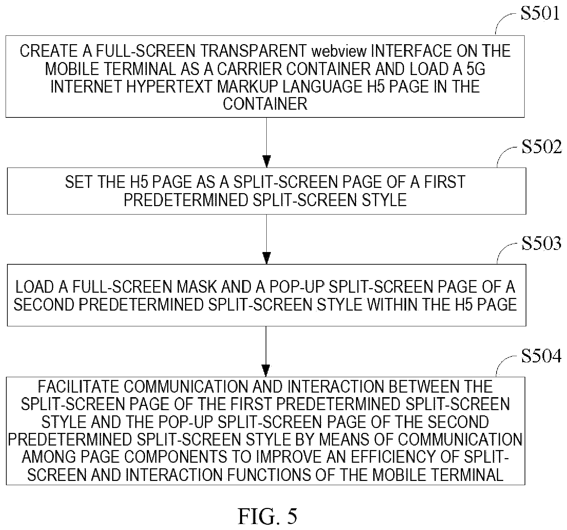

FIG. 5 is a schematic flow chart of a method for split-screen interaction on mobile terminal according to embodiments of the present disclosure. The method comprises the following steps:
S501: create a full-screen transparent web view interface on the mobile terminal as a carrier container and load a fifth-generation (5G) Internet Hypertext Markup Language H5 page in the container.

In this embodiment, in order to improve the efficiency of split-screen on the mobile terminal and enrich the forms and functions of interactions between split-screen pages, it is first necessary to create a full-screen transparent network view web view interface on the mobile terminal as a carrier container. The H5 page is loaded within the container to perform subsequent step S502.

Specifically, in an optional implementation, step S501 may include the following steps A1-A3:
Step A1: create a full-screen web view as a carrier container.

In this implementation, in order to ensure that the mobile terminal's split screen and communication and interaction between split-screen interfaces can be realized within the H5 page, it is first necessary to implement a full-screen web view to render a full-screen container as a carrier to perform subsequent step A2.

Step A2: create a request for H5 page and load the H5 page in the container in response to the request.

In this implementation, after a full-screen web view is created as a carrier container in step A1, in order to implement the split-screen and the communication and interaction the between split-screen interfaces of the mobile terminal in the H5 page, a request for H5 page can be created. In response to the request, the H5 page is loaded in the web view container.

Step A3: after setting the background of the web view to be transparent, add the web view to the interface on the mobile terminal.

In this implementation, after creating a full-screen web view as a carrier container in step A1, in order to implement the split-screen and the communication and interaction the between split-screen interfaces of the mobile terminal in the H5 page, the background of the full-screen web view also needs to be set to be transparent to avoid covering the displayed content of the loaded H5 page. After setting the background of the web view to be transparent and successfully loading the H5 page, the full-screen transparent web view with the loaded H5 page can be added to the interface on the mobile terminal to perform subsequent step S502.

For example, considering the IOS system as an example, the implementation code to create a full-screen transparent web view on the mobile terminal as a carrier container and load an H5 page therein can be as follows:

```
 C
 (void) example {
 // 1. Create a full-screen web view
 UIWeb view *web view = [[UIWeb view alloc] initWithFrame:CGRectMake(0, 0,
 SCREENWIDTH, SCREENHEIGHT)];
 // 2. Create Request for H5 page
 NSMutableURLRequest *request =[NSMutableURLRequest requestWithURL:[NSURL
 URLWithString:@"https://xxx/"]];
 // 3. Set the web view background to be transparent
 [web view setBackgroundColor:['rgba(0,0,0,0)']];
 [web view setOpaque:NO];
 // 4. Load H5 page
 [web view loadRequest:request];
 // 5. Finally add web view to the interface
 [self.view addSubview:web view];
 }
```

The execution order of steps 2 and 3 is not limited as long as step 2 is executed before step 4. That is, the execution order of the above code can be one of: steps 1, 2, 3, 4 and 5; steps 1, 3, 2, 4 and 5; or steps 1, 2, 4, 3 and 5.

S502: set the H5 page as a split-screen page of a first predetermined split-screen style.

In this embodiment, after the full-screen transparent web view is implemented and the H5 page is loaded in the container in step S501, the H5 page can be further set as a split-screen page of the first predetermined split-screen style to perform subsequent step S503.

The split-screen page of the first predetermined split-screen style can be set according to the actual situations. Embodiments of the present disclosure do not suggest any limitations. For example, the split-screen page of the first predetermined split-screen style can be set to a split-screen page occupying half of screen. That is, the H5 page can be set to a split-screen page occupying half of the screen.

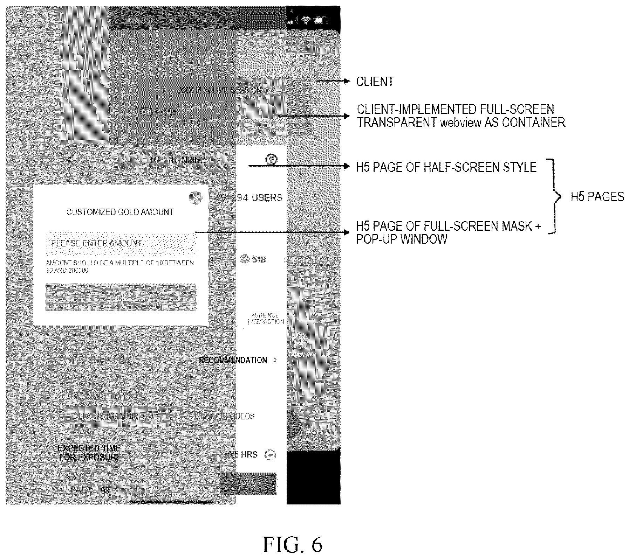

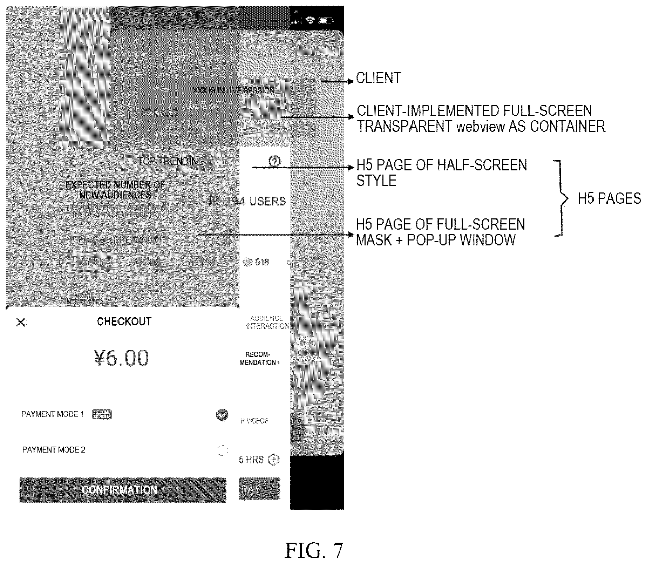

Specifically, in an optional implementation, after implementing a full-screen transparent web view and loading the H5 page in it, the overall height of the H5 page can be set to the full-screen height and the page background can be set to be transparent. Then the overall layout of the H5 page can be divided into two parts: the header and the text rendered line-by-line (content). The content can be the "Top Trending" page as shown in FIG. 6 or FIG. 7. The background of the header can be set to be transparent, the background of the content can be set to the predetermined background color (white on the "Top Trending" page as shown in FIG. 6 or FIG. 7), and the height of the content can be set to half the screen height to implement the half-screen H5 page, as shown in FIG. 6 or FIG. 7.

S503: within the H5 page, load a full-screen mask and a pop-up split-screen page of a second predetermined split-screen style.

In this embodiment, after setting the H5 page as a split-screen page of the first predetermined split-screen style in step S502, for example, after setting the H5 page as a split-screen page of a half-screen style, a full-screen mask and a pop-up split-screen page of the second predetermined split-screen style can be loaded within the H5 page, so that the efficient communication and interaction between the two split-screen pages can be implemented in subsequent step S504.

The pop-up split-screen page of the second predetermined split-screen style can be set according to the actual situations. Embodiments of the present disclosure do not suggest any limitations in this regard. For example, the split-screen page of the second predetermined split-screen style can be set to a pop-up split-screen interface that is displayed in the center of the full screen or a split-screen page of a three-part screen style, that is, a pop-up split-screen interface that is displayed in the center on the full-screen mask or a pop-up split-screen page that is displayed in a three-part screen style, as shown in FIG. 6 and FIG. 7, respectively.

Specifically, in an optional implementation, after setting the H5 page to a split-screen page of the first predetermined split-screen style, e.g., after setting the H5 page to a half-screen style split-screen page, it is possible to first set the H5 page to a split-screen page of a half-screen style. Within the page, a full-screen mask component is added, and the full-screen mask is loaded by a full-screen mask component. The specific implementation process is consistent with the known approaches and will not be repeated here. Then pop-up split screen page of second predetermined split-screen style is displayed on the full-screen mask in a pop-up manner (the pop-up split screen page "custom gold amount" that is displayed in the center, as shown in FIG. 6; or the "Checkout" pop-up split screen page of the three-part screen style as shown in FIG. 7), thereby achieving split-screen display within the H5 page.

S504: within the H5 page, the communication and interaction between the split-screen page of the first predetermined split-screen style and the pop-up split-screen page of the second predetermined split-screen style are realized by means of communications among page components, to improve the split-screen efficiency and interaction functions on the mobile terminal.

In this embodiment, after setting the H5 page as a split-screen page of the first predetermined split-screen style in step S502 and loading the full-screen mask and the pop-up window split of the second predetermined split-screen style within the H5 page in step S503, the communication and interaction between the split-screen page of the first predetermined split-screen style and the pop-up split-screen page of the second predetermined split-screen style are carried out within the H5 page by means of communications among page components. For example, in FIG. 6, the communication and interaction between the "Get Trending" page and the "Customized Gold Amount" pop-up split-screen page displayed in the center of the full-screen mask can be realized. As another example, in FIG. 7, communication and interaction between the "Get Trending" page and the "Checkout" pop-up split-screen page of the three-screen style displayed on the full-screen mask can be realized. In this way, the forms and functions of the communication between split-screen pages can be enhanced by the communication approaches among page components, and the efficiency split-screen can be improved on the mobile terminal.

The communications among page components include, but are not limited to, communications among parent and child components, communications among sibling components, and communications cross-components. Communications among parent and child components can be communications in which the parent component provides data to the child component by means of props, and the child component provides data to the parent component by callback functions. Sibling components can be connected and communicated through the parent component; and communication cross-components can be done through context or with a third-party library responsible for global state management.

Specifically, in an optional implementation, step S504 may comprise facilitating communication and interaction between the split-screen page of the first predetermined split-screen style and the second split-screen page of the second predetermined split-screen style within the H5 page by means of communications among parent and child components, to improve the efficiency of split-screen and interaction functions on the mobile terminal. Next, detailed descriptions of the communication and interaction process of the split-screen page will be explained in an example where the full-screen mask is opened by clicking a button on the split-screen page, the text input by the user on the pop-up split-screen page on the full-screen mask is received, and the text is displayed back on the page. The specific implementation process comprises the following steps B1-B3:

Step B1: within the H5 page, in response to a user's click operation on a button on the split-screen page of the first predetermined split-screen style, open the full-screen mask with a button component.

In this implementation, within the H5 page, the communication and interaction between the split-screen page of the first predetermined split-screen style and the pop-up split-screen page of the second predetermined split-screen style are realized by means of communications among parent and child components. At this time, the used parent component "Container" contains three sub-components, namely, a button component "Button", a text component "Text", and a full-screen mask component "Dialog", as well as two variables "dialogVisible" and "inputText". Specifically, within the H5 page, if the split-screen page button of the first predetermined split-screen style is clicked by the user, in response to the click operation, the button component "Button" is used to trigger a callback event by a callback function (such as the onClick function in the following code example), the variable "dialogVisible" is set to "True" to open the full-screen mask, and a pop-up split-screen page of the second predetermined split-screen style is displayed thereon to perform subsequent step B2.

For example, as shown in FIG. 6, within the H5 page, if a user clicks the "Customized Gold Amount" button on the half-screen page of "Top Trending", in response to the click operation, the button component "Button" can be used to trigger a callback event by a callback function (such as the onClick function in the following code example) to open the full-screen mask and display the "Customized Gold Amount" pop-up split-screen page in the center of the full-screen mask.

Step B2: display, with a text component, text content input by the user in the pop-up split-screen page of the second predetermined split-screen style of the full-screen mask.

In this implementation, after the full-screen mask is opened within the H5 page and a pop-up split-screen page of the second predetermined split-screen style is displayed thereon in step B1, and after the user inputs text on the split-screen page of the second predetermined split-screen style, the text component "Text" can be used to receive the value of a variable "inputText" passed by the parent component in props manner. For example, the text component "Text" can use a props field such as "text" to receive the value of a variable "inputText" provide by its parent component, and the value is the text content that the user input on the split-screen page of the second predetermined split-screen style, to perform subsequent step B3.

Step B3: controlling display and hiding of the full-screen mask with a full-screen mask component; and providing the text content input by the user in the pop-up split-screen page of the second predetermined split-screen style to the parent component by a callback function, and assigning a value to a respective variable in the parent component to facilitate the communication and interaction between the split-screen page of the first predetermined split-screen style and the pop-up split-screen page of the second predetermined split-screen style to improve the efficiency of split-screen and the interaction functions of the mobile terminal.

In this implementation, after the full-screen mask is opened within the H5 page and a pop-up split-screen page of the second predetermined split-screen style is displayed thereon in step B1, and after the user inputs text on the split-screen page of the second predetermined split-screen style and clicks "complete" button, the full-screen mask component "Dialog" can be used to receive the value of a variable "dialogVisible" passed by the parent component through props. For example, the full-screen mask component "Dialog" can use a props field such as "visible" to receive the value of a variable "dialogVisible" passed by the parent component, and the value is the user's click on "complete" button on the split-screen page of the second predetermined split-screen style, thereby controlling the hiding of the full-screen mask. In the meantime, the callback event is triggered by the callback function (such as the onInput function in the following code example) to pass the text content input by the user on the split-screen page of the second predetermined split-screen style to the parent component and assign it to the corresponding variable "inputText" in the parent component. As such, the parent component can pass the value of the variable "inputText" to the text component "Text" for display. By means of communications between parent and child components, the communication and interaction between the split-screen page of the first predetermined split-screen style and the pop-up split-screen page of the second predetermined split-screen style are realized, and the efficiency of split-screen and interaction functions of the mobile terminal are improved.

For example, as shown in FIG. 6, within the H5 page, if the user enters "20" in the "Please enter amount" position on the split-screen page of the "Customized Gold Amount" pop-up window displayed in the center of the full-screen mask and clicks" and clicks the "OK" button, the full-screen mask component "Dialog" can be used to receive the value "false" of a variable "dialogVisible" which is passed by the parent component through a props field "visible", thereby hiding the full-screen mask. At the same time, the callback event is triggered by a callback function (such as the onInput function in the following code example), "20", which is input by the user at the position "Please enter amount" on the pop-up split-screen page "Customized Gold Amount" centered on the full-screen mask, is passed to the parent component and assigned to the corresponding variable "inputText" in the parent component, so that the parent component passes the value "20" of the variable "inputText" to the text component "Text" for display. In FIG. 6, it is displayed at the position for showing the mount of gold in the lower left corner of the half-screen page of "Top Trending". By means of the communications between parent and child components, communication and interaction between the page "Top Trending" and the pop-up split-screen page "Customize Gold Amount" displayed in the centered on the full-screen mask are realized.

Further, as shown in FIG. 7, within the H5 page, if the user clicks the "Pay" button in the lower right corner of the "Top Trending" half-screen page, in response to the click operation and by use of the button component "Button", the callback event can be triggered by the callback function (such as the onClick function) to open the full-screen mask as shown in FIG. 7 and display pop-up split-screen page "Checkout" of three-screen style displayed on the full-screen mask.

After the user selects the payment method and clicks the "Confirm Payment" button to complete the payment, the communication and interaction between the page "Top Trending" and the pop-up split-screen page "Checkout" displayed in three-screen manner on the full-screen mask as shown in FIG. 7 is completed.

For example, considering the programming language JavaScript (JS for short) as an example, within the H5 page, by means of the communication between parent and child components, a split-screen page of the first predetermined split-screen style and a pop-up window of the second predetermined split-screen style are realized. The implementation code for communication and interaction between split-screen pages is as follows:

```
 JavaScript
 // Content component of a certain area in the page
 <Container>
 // Button component, click to open the full screen mask
 <Button onClick={() => dialogVisible = true}>Click to open the full-screen mask pop-up
 window</Button>
 //Text component, used to display the text entered by the user in the full-screen mask
 <Text text={ inputText }></Text>
 // Full screen mask component
 // Control the display and hiding of the mask by passing in props: visible
 // Pass the user input text to the parent component through the onInput callback function and
 assign it to the inputText variable.
 <Dialog visible= {dialogVisible} onInput= f (text) => inputText=text}>
 Full screen masked pop-up window
 </Dialog>
 </Container>
```

In summary, embodiments of the present disclosure provide a method for split-screen interaction on the mobile terminal. First, a full-screen transparent web view interface of the mobile terminal is created as a carrier container, and the H5 page is loaded in the container. Then the H5 page is set as a split-screen page of a first predetermined split-screen style. Then, within the H5 page, the full-screen mask and a pop-up split-screen page of the second predetermined split-screen style are loaded. Within the H5 page, the communication and interaction between the split-screen page of the first predetermined split-screen style and the pop-up split-screen page of the second predetermined split-screen style are realized by means of the communications among page components, so as to improve the split-screen efficiency and interaction function of the mobile terminal. It can be seen that the embodiments of the present disclosure first implement a full-screen transparent web view to render a full-screen container and open an H5 page inside the container, and then implement a predetermined split-screen style split-screen page and a full-screen masked pop-up split-screen page in the H5 page. Moreover, the interaction and communication between these two split-screen pages are all performed within the H5 page. As a result, it is possible to improve the split-screen efficiency of the mobile terminal and enrich the forms and functions of interactions between the split-screen pages.

### Second Embodiments

This embodiment proposes an apparatus for split-screen interaction on the mobile terminal. For related content, please refer to the above method embodiments.

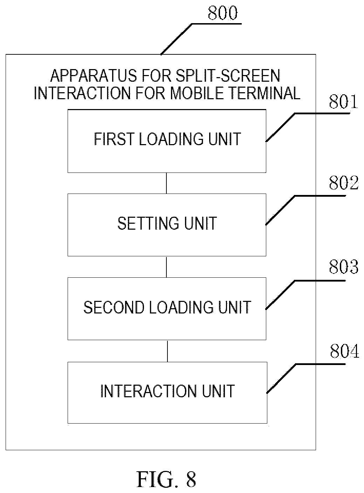

FIG. 8 is a schematic diagram of an apparatus for split-screen interaction on the mobile terminal proposed by this embodiment. The apparatus 800 comprises: a first loading unit 801 configured to create a full-screen transparent web view interface on the mobile terminal as a carrier container and loading a 5G internet hypertext markup language H5 page in the container; a setting unit 802 configured to set the H5 page as a split-screen page of a first predetermined split-screen style; a second loading unit 803 configured to load a full-screen mask and a pop-up split-screen page of a second predetermined split-screen style within the H5 page; and an interaction unit 804 configured to facilitate communication and interaction between the split-screen page of the first predetermined split-screen style and the pop-up split-screen page of the second predetermined split-screen style by means of communication among page components to improve an efficiency of split-screen and interaction functions of the mobile terminal.

In a possible embodiment, the first loading unit 801 comprises a creating subunit configured to create a full-screen web view as a carrier container; creating a request for H5 page, and a first loading subunit configured to load the H5 page in the container in response to the request; and an adding subunit configured to, after setting a background of the web view to be transparent, add the web view with the transparent background that loads the H5 page to an interface of the mobile terminal.

In a possible embodiment, the setting unit 802 comprises a first setting subunit configured to set an overall height of the H5 page to full screen height, and a second setting subunit configured to set a background of the page to be transparent and to divide an overall layout of the H5 page into a header and text content that is rendered line-by-line, setting a background of the header to be transparent, setting a background of the content to a predetermined background color, and setting a height of the content to a half-screen height.

In a possible embodiment, the second loading unit 803 comprises a second loading subunit configured to add a full-screen mask component within the H5 page and load the full-screen mask by means of the full-screen mask component; and a display subunit configured to display the pop-up split-screen page of second predetermined split-screen style on the full-screen mask in a pop-up display manner.

In a possible embodiment, the interaction unit 804 is specifically configured to facilitate the communication and interaction between the split-screen page of the first predetermined split-screen style and the pop-up split-screen page of the second predetermined split-screen style by means of communications among parent and child components to improve the efficiency of split-screen and the interaction functions of the mobile terminal.

In a possible embodiment, the interaction unit 804 comprises: an opening subunit configured to, within the H5 page, in response to a user's click operation on a button on the split-screen page of the first predetermined split-screen style, open the full-screen mask with a button component; a display subunit configured to display text content input by the user in the pop-up split-screen page of the second predetermined split-screen style of the full-screen mask with a text component; an interaction subunit configured to control display and hiding of the full-screen mask with a full-screen mask component and provide the text content input by the user in the pop-up split-screen page of the second predetermined split-screen style to the parent component by a callback function, and assign a value to a respective variable in the parent component to facilitate the communication and interaction between the split-screen page of the first predetermined split-screen style and the pop-up split-screen page of the second predetermined split-screen style to improve the efficiency of split-screen and the interaction functions of the mobile terminal.

In a possible embodiment, the split-screen page of the first predetermined split-screen style is a half-screen split-screen page, and the pop-up split-screen page of the second predetermined split-screen style is a pop-up split-screen interface displayed in a center of full screen or a pop-up split-screen page of a three-screen style.

Furthermore, embodiments of this disclosure provide a device for split-screen interaction on a mobile terminal, comprising a processor, a memory, and a system bus. The processor and the memory are connected through the system bus, and the memory is configured to store one or more programs comprising instructions, the instructions, when executed by the processor, causing the processor to perform the method for split-screen interaction on a mobile terminal as described above.

Furthermore, embodiments of the present disclosure provide a computer-readable storage medium storing instructions thereon, the instructions, when executed on a terminal device, causing the terminal device to execute any of the method for split-screen interaction on a mobile terminal as described above.

From the description of the above embodiments, those skilled in the art can clearly understand that all or part of the steps in the above embodiment method can be implemented by means of software plus the necessary general hardware platform. Based on this understanding, the technical solution of the present disclosure can be embodied in the form of a software product in essence or that contributes to the existing technology. The computer software product can be stored in a storage medium, such as ROM/RAM, disk , optical disk, etc., including a number of instructions to cause a computer device (which can be a personal computer, a server, or a network communication device such as a media gateway, etc.) to execute the methods described in each embodiment or certain parts of the embodiment of the present disclosure.

It should be noted that each embodiment is described in a progressive manner in this manual. Each embodiment focuses on its differences from other embodiments. The same and similar parts between each embodiment can be referred to each other. As for the device disclosed by embodiments, since it corresponds to the method disclosed by embodiments, the description is relatively simple. For relevant information, please refer to the description of the method section.

It should also be noted that in this article, relational terms such as first and second are only used to distinguish one entity or operation from another entity or operation, and do not necessarily require or imply that these entities or operations There is no such actual relationship or sequence between them. Furthermore, the terms "comprises," "comprises," or any other variations thereof are intended to cover a non-exclusive inclusion such that a process, method, article, or apparatus that includes a list of elements includes not only those elements, but also those not expressly listed other elements, or elements inherent to the process, method, article or equipment. Without further limitation, an element defined by the statement "comprises a..." does not exclude the presence of additional identical elements in a process, method, article, or apparatus that includes the stated element.

The above description of the disclosed embodiments enables those skilled in the art to implement or use the disclosure. Various modifications to these embodiments will be apparent to those skilled in the art, and the general principles defined herein may be implemented in other embodiments without departing from the spirit or scope of the disclosure. Therefore, the present disclosure is not to be limited to the embodiments shown herein but is to be accorded the widest scope consistent with the principles and novel features disclosed herein.

## Claims

1. A method for split-screen interaction on a mobile terminal, comprising:
creating a full-screen transparent web view interface on the mobile terminal as a carrier container and loading a 5G internet hypertext markup language H5 page in the container;
setting the H5 page as a split-screen page of a first predetermined split-screen style;
loading a full-screen mask and a pop-up split-screen page of a second predetermined split-screen style within the H5 page; and
facilitating communication and interaction between the split-screen page of the first predetermined split-screen style and the pop-up split-screen page of the second predetermined split-screen style by means of communication among page components to improve an efficiency of split-screen and interaction functions of the mobile terminal.

2. The method of claim 1, wherein creating a full-screen transparent web view interface on the mobile terminal as a carrier container and loading a 5G internet hypertext markup language H5 page in the container comprises:
creating a full-screen web view as a carrier container;
creating a request for H5 page, and loading the H5 page in the container in response to the request; and
after setting a background of the web view to be transparent, adding the web view with the transparent background that loads the H5 page to an interface of the mobile terminal.

3. The method of claim 1, wherein setting the H5 page as a split-screen page of a first predetermined split-screen style comprises:
setting an overall height of the H5 page to full screen height, and setting a background of the page to be transparent; and
dividing an overall layout of the H5 page into a header and text content that is rendered line-by-line, setting a background of the header to be transparent, setting a background of the content to a predetermined background color, and setting a height of the content to a half-screen height.

4. The method of claim 1, wherein loading a full-screen mask and a pop-up split-screen page of a second predetermined split-screen style within the H5 page comprises:
adding a full-screen mask component within the H5 page, and loading the full-screen mask by means of the full-screen mask component; and
displaying the pop-up split-screen page of second predetermined split-screen style on the full-screen mask in a pop-up display manner.

5. The method of claim 1, wherein facilitating a communication and interaction between the split-screen page of the first predetermined split-screen style and the pop-up split-screen page of the second predetermined split-screen style by means of communication among page components to improve an efficiency of split-screen and interaction functions of the mobile terminal comprises:
facilitating the communication and interaction between the split-screen page of the first predetermined split-screen style and the pop-up split-screen page of the second predetermined split-screen style by means of communications among parent and child components to improve the efficiency of split-screen and the interaction functions of the mobile terminal.

6. The method of claim 5, wherein facilitating the communication and interaction between the split-screen page of the first predetermined split-screen style and the pop-up split-screen page of the second predetermined split-screen style by means of communications among parent and child components to improve the efficiency of split-screen and the interaction functions of the mobile terminal comprises:
within the H5 page, in response to a user's click operation on a button on the split-screen page of the first predetermined split-screen style, opening the full-screen mask with a button component;
displaying, with a text component, text content input by the user in the pop-up split-screen page of the second predetermined split-screen style of the full-screen mask;
controlling display and hiding of the full-screen mask with a full-screen mask component; and providing the text content input by the user in the pop-up split-screen page of the second predetermined split-screen style to the parent component by a callback function, and assigning a value to a respective variable in the parent component to facilitate the communication and interaction between the split-screen page of the first predetermined split-screen style and the pop-up split-screen page of the second predetermined split-screen style to improve the efficiency of split-screen and the interaction functions of the mobile terminal.

7. The method of any of claims 1 to 6, wherein the split-screen page of the first predetermined split-screen style is a half-screen split-screen page, and the pop-up split-screen page of the second predetermined split-screen style is a pop-up split-screen interface displayed in a center of full screen or a pop-up split-screen page of a three-screen style.

8. An apparatus for split-screen interaction on a mobile terminal, comprising:
a first loading unit configured to create a full-screen transparent web view interface on the mobile terminal as a carrier container and loading a 5G internet hypertext markup language H5 page in the container;
a setting unit configured to set the H5 page as a split-screen page of a first predetermined split-screen style;
a second loading unit configured to load a full-screen mask and a pop-up split-screen page of a second predetermined split-screen style within the H5 page; and
an interaction unit configured to facilitate communication and interaction between the split-screen page of the first predetermined split-screen style and the pop-up split-screen page of the second predetermined split-screen style by means of communication among page components to improve an efficiency of split-screen and interaction functions of the mobile terminal.

9. A device for split-screen interaction on a mobile terminal, comprising a processor, a memory, and a system bus,
the processor and the memory connected through the system bus,
the memory configured to store one or more programs comprising instructions, the instructions, when executed by the processor, causing the processor to perform the method of any of claims 1-7.

10. A computer-readable storage medium storing instructions thereon, the instructions, when executed on a terminal device, causing the terminal device to execute the method of any of claims 1-7.
